(19) Europäisches Patentamt
European Patent Office
Office européen des brevets

(11) **EP 1 381 807 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(21) Anmeldenummer: **02742904.2**

(22) Anmeldetag: **17.04.2002**

(51) Int Cl.:
*F17C 5/02* *(2006.01)*     *F17C 5/04* *(2006.01)*

(86) Internationale Anmeldenummer:
**PCT/EP2002/004259**

(87) Internationale Veröffentlichungsnummer:
**WO 2002/086379 (31.10.2002 Gazette 2002/44)**

(54) **DRUCKBEHÄLTER**

PRESSURE CONTAINER

RECIPIENTS POUR FLUIDES SOUS PRESSION

(84) Benannte Vertragsstaaten:
**AT BE CH CY DE DK ES FI FR GB GR IE IT LI LU MC NL PT SE TR**

(30) Priorität: **19.04.2001 DE 10119115**

(43) Veröffentlichungstag der Anmeldung:
**21.01.2004 Patentblatt 2004/04**

(73) Patentinhaber: **Air Liquide Deutschland GmbH**
**40235 Düsseldorf (DE)**

(72) Erfinder: **MICHEL, Friedel**
**40699 Erkrath (DE)**

(74) Vertreter: **Kahlhöfer, Hermann et al**
**KNH Patentanwälte**
**Kahlhöfer Neumann Herzog Fiesser**
**Postfach 10 33 63**
**40024 Düsseldorf (DE)**

(56) Entgegenhaltungen:
**EP-A- 0 033 386**     **DE-A- 19 817 324**
**FR-A- 2 799 526**     **US-A- 4 489 767**

**Beschreibung**

Die Erfindung betrifft einen Druckbehälter, insbesondere einen Druckbehälter, der für die Befüllung mit tiefsiedenden permanenten Gasen oder Gasgemischen geeignet ist.

Mit dem Begriff "permanente Gase oder Gasgemische" sollen hier solche Gase oder Gasgemische bezeichnet werden, die aufgrund der Lage ihrer kritischen Temperatur bei Raumtemperatur durch Druckerhöhung allein nicht zu verflüssigen sind. Von besonderer wirtschaftlicher Bedeutung sind dabei insbesondere Wasserstoff und Erdgas, die beispielsweise als Energielieferanten in Fahrzeugtanks für Brennstoffzellen - Antriebe Verwendung finden.

Um Gase mit einer hohen Speicherdichte lagern zu können, erfolgt die Speicherung entweder in kaltem, flüssigem Zustand oder gasförmig unter hohen Drücken. Die Lagerung im flüssigen Zustand ermöglicht zwar eine sehr hohe Speicherdichte, sie ist jedoch nur unter Inkaufnahme mehr oder minder großer Abdampfverluste möglich, die auch bei gut wärmeisolierten Behältern unvermeidlich sind.

Zur Druckspeicherung von Gasen wurden bislang überwiegend Kryokolbenpumpeen eingesetzt, die einen maximalen Fülldruck im Druckbehälter von etwa 200 bar erlauben. Die Kryokolbenpumpeen sind jedoch in Bau und Betrieb sehr aufwendig, zudem führen neuere Anwendungen, insbesondere in der Brennstoffzellentechnik, zum Bedürfnis nach weitaus höheren Drücken von 700 bar oder mehr. Derartige Drücke sind mit konventioneller Kompressionstechnik nicht oder nur mit unvertretbar hohem Aufwand zu realisieren.

Einen Ausweg bietet das Verfahren der kalten Abfüllung, das beispielsweise in der EP-0 033 386 A1 oder der DE 198 17 324 A1 beschrieben ist. Dabei wird das in Druckbehälter einzufüllende Gas vor dem Befüllen verflüssigt oder auf eine Temperatur, die nur geringfügig oberhalb seines Siedepunktes liegt, abgekühlt. Als bevorzugtes Kühlmittel dient dabei flüssiger Stickstoff. Da sich das Gasvolumen beim Abkühlen (bei gleichbleibendem Druck) ungefähr proportional zur Temperatur verhält, gelingt auf diese Weise eine nicht unerhebliche Vergrößerung der effektiven Speicherkapazität.

Die bekannten Verfahren, die mit kalter Abfüllung arbeiten, sind mit wesentlichen Nachteilen behaftet. Einerseits ist die Verflüssigung von Wasserstoff nur mit einem sehr hohen Aufwand möglich. Die Befüllung des Druckbehälters mit kaltem Gas führt andererseits bereits während des Befüllvorgangs durch den Kontakt mit dem zu befüllenden Druckbehälter zu einer erheblichen Erwärmung des Gases, die die anschließende Druckerhöhung und damit die erzielbare Speicherkapazität deutlich reduziert. So erwärmt sich beispielsweise Wasserstoff, der mit einer Temperatur von 93 K (-180°C) eingefüllt wird, bereits während des Befüllvorgangs um mehr als 100K auf ca. 200K (-73°C). Der durch die anschließende Erwärmung des Füllgases erreichbare Druckgewinn im Behälter ist entsprechend gering.

Aus der FR-A-2799526 ist ein innen zur Formgebung und mechanischen Verstärkung mit Kunststoff beschichteter Tank bekannt, jedoch ist dieser für Druckbereiche bis maximal 70 bar ausgelegt.

Aus der EP-A-0033386 ist ein Tank mit einer Außenisolierung aus Kunststoff bekannt, wobei die Außenisolierung zwar die Wärmeleitung von und nach außen verringern, aber nicht bei Befüllen des Tanks eine Erwärmung des Inhaltes durch die Behälterwand selbst begrenzen kann.

Aufgabe der vorliegenden Erfindung ist demnach, die Speicherung unter hohen Drücken wirtschaftlicher zu gestalten.

Gelöst ist diese Aufgabe durch einen Druckbehälter mit den Merkmalen des Patentanspruchs 1 sowie durch Verfahren mit den Merkmalen des Anspruchs 4 bzw. 5. Vorteilhafte Ausgestaltungen sind in den abhängigen Ansprüchen angegeben.

Erfindungsgemäß ist also ein Druckbehälter für Drücke oberhalb von 300 bar, der insbesondere zur Befüllung mit tiefsiedenden Gasen oder Gasgemischen tiefer Temperatur geeignet ist, zumindest innenseitig mit einer Oberfläche aus einem Material mit einem geringen Wärmeeindringkoeffizient versehen, nämlich einem Kunststoff wie Polyethylen oder PTFE (Polytetrafluorethylen), dessen Wärmeeindringkoeffizient lediglich etwa 10 bis 15 % des Wärmeeindringkoeffizienten von VA-Stahl beträgt.

Die innenseitige Oberfläche vermindert die beim Stande der Technik so nachteilige sprunghafte Erwärmung des Gases beim Befüllvorgang. Als "tiefe Temperatur" wir hier ein Temperaturwert verstanden, der bei oder knapp über dem Siedepunkt des Füllgases oder eines zur Kühlung des Füllgases eingesetzten gasförmigen Kühlmediums liegt. Als Füllgas kann beispielsweise Wasserstoff oder ein Wasserstoff enthaltendes Gasgemisch, als Kühlmedium beispielsweise flüssiger Stickstoff vorgesehen sein.

Der Wärmeeindringkoeffizient (WK), der ein Maß für die Wärmestromdichte im Bereich der Oberfläche eines Körpers darstellt, bestimmt sich bei einer sprunghaften Temperaturänderung an der Oberfläche, wie sie beim Befüllen eines auf Umgebungstemperatur stehenden Druckbehälters mit Kaltgas auftritt, näherungsweise zu

$$WK = (\lambda \cdot \rho \cdot c)^{0.5}$$

wobei $\lambda$ die Wärmeleitfähigkeit, $\rho$ die Dichte und c die spezifische Wärmekapazität bezeichnet. Je geringer der WK-Wert ist, desto geringer ist der Wärmeeintrag in das Füllgas und damit die bereits beim Befüllvorgang auftretende Erwärmung des Füllgases. Die Erwärmung des Füllgases bis zum thermischen Gleichgewicht mit der Umgebung erfolgt bei geringem WK-Wert der Behälterinnenoberfläche somit überwiegend im Anschluss an den Befüllvorgang und trägt wesentlich zur Druckerhöhung im Behälterinnern bei.

Als Oberfläche für die Behälterinnenseite wird eine Kunststoffbeschichtung verwendet. Die Beschichtungen können dabei in bereits fertigen Druckbehältern aus Metall oder Verbundmaterial eingebracht werden. Dies erfolgt durch an sich bekannte Verfahren, wie Sprühverfahren oder thermische Beschichtungsverfahren, bei denen das Beschichtungsmaterial in Pulverform in den Behälter eingebracht und anschließend aufgeschmolzen wird. Auch Blasverfahren sind zur Herstellung einer Kunststoffbeschichtung einsetzbar.

Als Material für die behälterinnenseitige Oberfläche, bzw. die Beschichtung, dienen Kunststoffe wie Polyethylen oder PTFE (Polytetrafluorethylen), die zum einen preisgünstig in der Herstellung sind und deren WK-Werte zum anderen lediglich etwa 10 bis 15 % des WK-Wertes von VA-Stahl betragen.

Die erreichbare Speicherkapazität wird zudem durch den Druck des Füllgases beim Einfüllen bestimmt. Bei Fülldrücken oberhalb von 100bar und einer Temperatur von 77K (-196 °C) sind beim erfindungsgemäßen Verfahren Druckerhöhungen um das Doppelte oder mehr erreichbar. Steht das Füllgas beim Einfüllen unter Druck von beispielsweise 150 bis 200 bar, können aufgrund der Wärmeausdehnung des eingefüllten Gases nach Beendigung des Befüllvorgangs Innendrücke von 300 bis 400 bar und mehr erzielt werden.

Besonders geeignet ist der erfindungsgemäße Aufbau bei Höchstdruckbehältern, die für Drücke von 700 - 1000 bar oder mehr zugelassen sind. Da die Erzeugung hoher Fülldrücke nur mit großem Aufwand möglich ist, macht sich bei derartigen Behältern der aufgrund der Erwärmung des Füllgases nach dem Befüllvorgang entstehende Druckgewinn außerordentlich vorteilhaft bemerkbar.

Bevorzugte Verwendungen des erfindungsgemäßen Druckbehälters sind beispielsweise Energiespeicher für Fahrzeuge oder für Brennstoffzellen. Brennstoffzellen-Antriebe werden zunehmend als ernstzunehmende Alternative zu herkömmlichen Antrieben für Fahrzeuge gesehen. Kleinvolumige Brennstoffzellen können beispielsweise auch als ideale Energiequellen für Laptops oder Mobiltelefone dienen. Die Brennstoffzelle benötigt als Reaktanden Sauerstoff und einen chemischen Energieträger, üblicherweise Wasserstoff. Während der Sauerstoff, ähnlich wie beim Verbrennungsmotor, meist aus der Luft der Umgebung entnommen werden kann, werden für den Wasserstoff Speichersysteme benötigt. Dabei wird der Wasserstoff entweder unmittelbar oder als Bestandteil eines anderen Stoffes, etwa Methanol oder Erdgas, gespeichert. Während jedoch die Speicherung des Wasserstoffs in Form von Methanol ein relativ komplexes und teures System zur Nutzbarmachung der Wasserstoffenergie (Reformer) erfordert, sind Systeme, die den Wasserstoff unmittelbar, insbesondere gasförmig unter Druck speichern, einfacher im Aufbau und im Einsatz.

Zweckmäßigerweise erfolgt die Befüllung des erfindungsgemäßen Druckbehältern nach einem Verfahren mit den Merkmalen des Patentanspruchs 4.

Dabei wird ein als Füllgas eingesetztes Gas oder Gasgemisch, das in einem Tank in tiefkaltem verflüssigten Zustand gelagert wird, dem Druckbehälter in flüssigem oder kaltem gasförmigem Zustand zugeführt. Zur Befüllung konventioneller Druckbehälter musste ein in tiefkaltem verflüssigtem Zustand gelagertes Gas vor der Befüllung erwärmt werden, da der Kontakt des kalten Gases mit der warmen Druckbehälterwand zu einer rapiden Erwärmung des Gases und damit zu einer sehr raschen und starken Druckerhöhung im Behälterinnern bereits in der Anfangsphase des Befüllvorgangs führt. Diese Druckerhöhung konnte daher nicht oder nur geringfügig zum Aufbau des Fülldrucks im Behälter eingesetzt werden. Erfindungsgemäß verzögert sich die Erwärmung des Druckbehälters dagegen weit über die Zeitspanne des eigentlichen Befüllvorgangs hinaus. Ein wesentlicher Teil des Fülldrucks im Behälter entsteht so durch die thermische Angleichung des Füllgases an die Umgebungstemperatur im Anschluss an den Befüllvorgang.

Alternativ zum vorgenannten Verfahren erfolgt die Befüllung des Druckbehälters mit einem Füllgas nach einem Verfahren mit den Merkmalen des Patentanspruchs 6. Dabei wird das als Füllgas eingesetzte Gas oder Gasgemisch einem Drucktank, in dem das Füllgas unter Druck gelagert wird, entnommen, in einem Wärmetauscher abgekühlt und dem Druckbehälter in kaltem gasförmigen oder flüssigen Zustand zugeführt. Als Drucktank eignen sich dabei konventionelle Hochdrucktanks, in denen Gas mit einem Druck von beispielsweise 200 bis 300 bar gespeichert wird. Mit diesem Verfahren ist eine besonders rasche Befüllung von Druckbehältern möglich.

Zur Kühlung des dem Drucktank entnommenen Kühlgases eignet sich dabei besonders ein Flüssiggas, beispielsweise flüssiger Stickstoff.

Anhand der Zeichnungen soll nachfolgend ein Ausführungsbeispiel der Erfindung näher erläutert werden.

In schematischen Ansichten zeigt:

Fig. 1: einen erfindungsgemäßen Druckbehälter beim Befüllen aus einem Hochdrucktank und

Fig. 2: einen erfindungsgemäßen Druckbehälter beim Befüllen aus einem Flüssiggastank.

Bei dem in den Zeichnungen gezeigten Druckbehälter 1 handelt es um eine aus Metall, wie VA-Stahl oder Aluminium gefertigte Druckgasflasche oder um einen Verbundbehälter mit einem metallischen Liner, wie er etwa in der DE 198 17 324 A1 beschrieben ist. Der Druckbehälter 1 ist beispielsweise für einen maximalen Fülldruck von 300bar zugelassen und tieftemperaturgeeignet, d.h. zur Befüllung mit kaltem Gas, etwa auf die Temperatur flüssigen Stickstoffs (77K bzw. -196°C) abgekühlter Wasserstoff, befähigt.

Die Behälterwand 2 des Druckbehälters 1 ist innenseitig mit einer Beschichtung 3 aus Kunststoff versehen. Für diese Beschichtung 3 kommt ein Material zum Einsatz, das einerseits einen sehr geringen Wärmeeindringkoeffizienten (WK) aufweist und damit eine zu rasche Erwärmung des Füllgases verhindert, andererseits jedoch ein gewisses Maß an Wärmeeintrag von der mit der Außenumgebung thermisch verbundenen Behälterwand 2 in das Füllgas zulässt, um im Anschluss an den Befüllvorgang eine weitere Erwärmung des Füllgases und damit eine Druckerhöhung im Behälter 1 bis zum Erreichen eines maximalen Fülldrucks zu ermöglichen. Als geeignetes Material für die Beschichtung 3 kommt beispielsweise Polyethylen oder PTFE zum Einsatz. Der WK -Wert von Polyethylen beträgt nur ca. 10 bis 15% des WK - Werte von Stahl. Die Stärke der Beschichtung 3 beträgt beispielsweise 2 -5 mm und ist mit bekannter Beschichtungstechnik aufgebracht.

Der Druckbehälter 1 wird in der im folgenden beschriebenen Weise mit Gas oder einem Gasgemisch, beispielsweise Stickstoff, Sauerstoff, Wasserstoff oder Argon, befüllt.

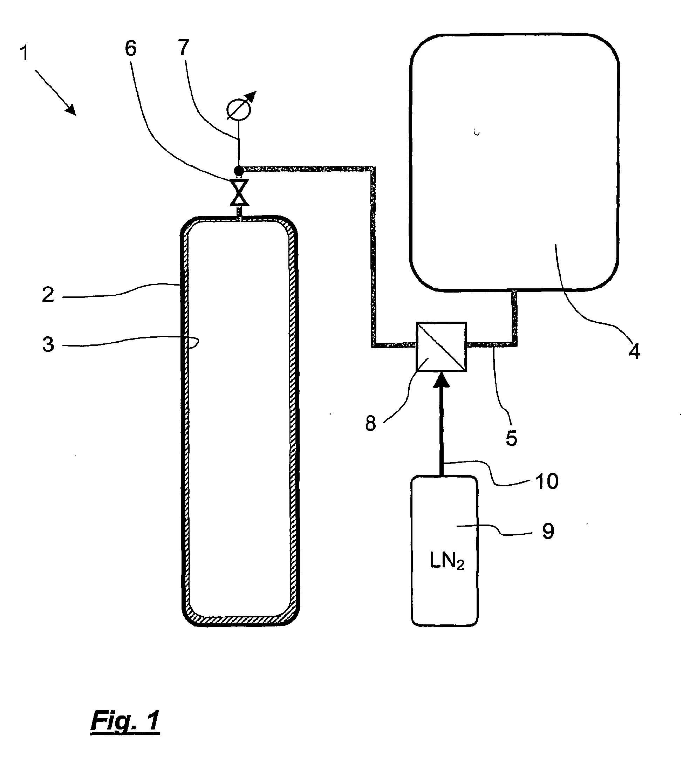

In einem ersten Ausführungsbeispiel nach Fig. 1 erfolgt die Befüllung des Druckbehälters 1 aus einem Hochdrucktank 4, beispielsweise aus einem ortsfesten Druckbehälter, in dem Gas unter hohen Drücken von 150 bis 200 bar bei Umgebungstemperatur gelagert wird. Der Hochdrucktank 4 ist mit dem Druckbehälter 1 über eine Gaszuleitung 5 lösbar verbunden. Im Kopfbereich des Druckbehälters 1 ist in üblicher Weise ein Ventil 6 angeordnet. Eine Druckmesseinrichtung 7 ermöglicht die Kontrolle über den in der Zuleitung 5 herrschenden Druck. In der Zuleitung 5 ist ein Wärmetauscher 8 integriert. Der Wärmetauscher 8 dient zum Kühlen des dem Druckbehälter 1 zugeführten Füllgases auf eine tiefe Temperatur. Zu diesem Zweck wird der in Fig. 1 gezeigte Wärmetauscher 8 mit flüssigem Stickstoff als Kältemedium betrieben, der einem Flüssiggastank 9 entnommen und über eine Zuleitung 10 dem Wärmetauscher 8 zugeleitet wird. Der Wärmetauscher 8 ist dabei so konstruiert, dass das Füllgas sehr stark abgekühlt wird, idealerweise auf eine Temperatur nahe der Temperatur des als Kältemedium eingesetzten flüssigen Stickstoffs (77K /-196°C), gleichzeitig jedoch der Druck in der Zuleitung 5 über den Wärmetauscher hinweg nicht oder nur unwesentlich reduziert wird.

Nach dem Anschließen des Druckbehälters 1 an die Zuleitung 5 erfolgt die Befüllung mit kaltem Füllgas bis zum Erreichen eines vorgegebenen Grenzdruckwertes, der erheblich unter dem maximalen Fülldruck des Druckbehälters 1 liegt und der direkt an der Druckmesseinrichtung gemessen oder durch Ablauf einer entsprechenden, empirisch festgestellten Füllgdauer festgestellt wird. Maximal kann die Befüllung bis zum Erreichen eines Druckausgleichs zwischen dem Druckbehälter 1 und dem Hochdrucktank 4 fortgesetzt werden.

Das kalte Gas strömt in den Druckbehälter 1 ein und erwärmt sich durch den thermischen Kontakt mit der Beschichtung 3. Wegen des geringeren WK-Wertes der Beschichtung erfolgt diese Erwärmung jedoch weitaus langsamer als dies bei konventionellen Druckbehältern ohne Innenisolation der Fall ist. Demzufolge erfolgt während des Befüllvorgangs nur eine relativ geringe Erwärmung des Füllgases im Innern des Behälters, wobei diese Erwärmung vorwiegend von dem gewählten Material und der Schichtdicke der Beschichtung 3 abhängt. Nach Beendigung des Befüllvorgangs wird das Ventil 6 geschlossen und somit der Druckbehälter 1 strömungstechnisch von der Zuleitung 5 getrennt. Durch die nachfolgende Erwärmung des Füllgases im Druckbehälter 1 erhöht sich der Innendruck. Je nach der Temperatur des Füllgases beim Befüllen kann der Innendruck dabei um einen Faktor 2 bis 4 ansteigen. Auf diese Weise gelingt es, auch mit einer konventionellen 200 bar- Fülltechnik Druckbehälter mit 300 bis 400 bar und mehr zu befüllen.

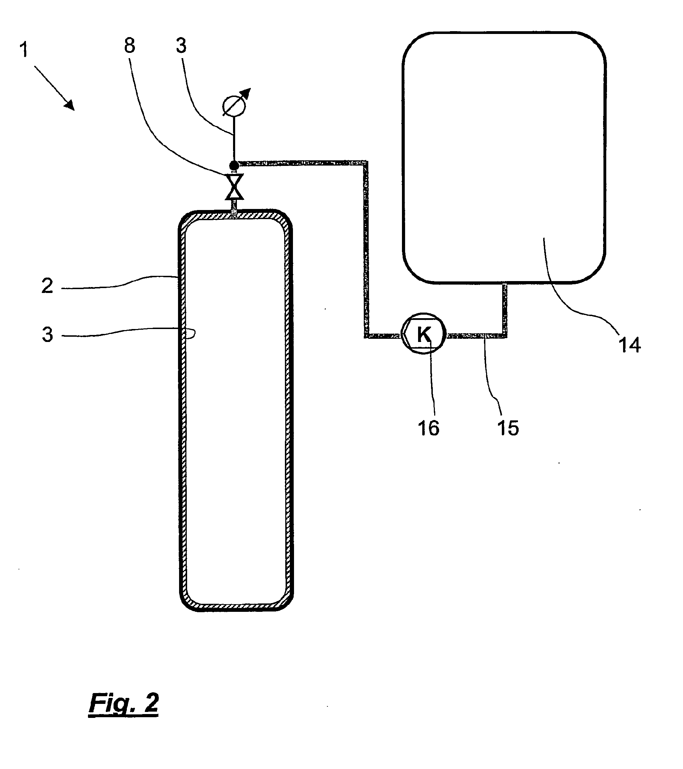

Bei dem in Fig. 2 gezeigten Ausführungsbeispiel wird der Druckbehälter 1 mit einem Flüssiggastank 14, beispielsweise einem Kaltvergaser oder einem Standtank für Flüssiggas verbunden. Dem Flüssiggastank 14 wird Gas in flüssigem oder tiefkaltem gasförmigen Zustand entnommen und über die Zuleitung 15 dem Druckbehälter 1 zugeführt. Vorzugsweise wird das Füllgas auf eine Temperatur gebracht, die oberhalb seines Siedepunktes liegt, das Füllgas wird also in gasförmigem, jedoch kalten Zustand eingefüllt. Das Gas wird mittels einer Kryokolbenpumpe 16 komprimiert. Eine Druckmesseinrichtung 17 erfasst dabei den am Druckbehälter 1 vorliegenden Druck. Auch hier erfolgt die Befüllung bis zum Erreichen eines vorgegebenen Druckwertes. Nach Beendigung des Befüllvorgangs wird ein Ventil 18 am Druckbehälter 1 geschlossen. Mit der allmählichen Erwärmung des im Druckbehälter 1 vorliegenden Füllgases steigt der Innendruck im Druckbehälter 1 an. Die Kompressionsleistung der Kryokolbenpumpe 16 ist dabei derart eingestellt, dass der Innendruck des Druckbehälters 1 nach der vollständigen Erwärmung des Füllgases auf Umgebungstemperatur den maximal zulässigen Fülldruck von beispielsweise 300 bar erreicht.

Der erfindungsgemäße Druckbehälter kann schnell mit hohen Drücken befüllt werden. Der Druckbehälter eignet sich insbesondere als fest eingebauter Fahrzeugtank, der mit Wasserstoff oder Erdgas unter Höchstdrücken von 700 bis 1000 bar befüllt wird. Derartige Tanks können bei einem Mittelklasse-Pkw ein Fassungsvermögen von 100l bis 500l aufweisen. Zum Befüllen des erfindungsgemäßen Tanks mit Wasserstoff ist dabei ein Ausbau des Tanks nicht erforderlich.

Bezugszeichenliste

1. Druckbehälter
2. Behälterwand

3. Beschichtung
4. Hochdrucktank
5. Zuleitung
6. Ventil
7. Druckmesseinrichtung
8. Wärmetauscher
9. Flüssiggastank
10. Zuleitung
11. -
12. -
13. -
14. Gastank
15. Zuleitung
16. Kryokolbenpumpe
17. Druckmesseinrichtung
18. Ventil

**Patentansprüche**

1. Druckbehälter (1) für Drücke oberhalb von 300 bar, insbesondere zur Befüllung mit tiefsiedenden permanenten Gasen oder Gasgemischen tiefer Temperatur, der behälterinnenseitig mit einer Oberfläche (3) aus einem Material mit einem geringen Wärmeeindringkoeffizient versehen ist, nämlich einem Kunststoff dessen Wärmeeindringkoeffizient lediglich etwa 10 bis 15 % des Wärmeeindringkoeffizienten von VA-Stahl beträgt, insbesondere Polyethylen oder PTFE (Polytetrafluorethylen).

2. Druckbehälter nach Anspruch 1, **dadurch gekennzeichnet, dass** das Material mit geringem Wärmeeindringkoeffizient eine Schichtdicke von 2 bis 5 mm aufweist.

3. Druckbehälter nach Anspruch 1 oder 2, **gekennzeichnet durch** die Ausbildung als Höchstdruckbehälter für Drücke oberhalb von 700 bar, insbesondere als Energiespeicher für Brennstoffzellen und/oder für mit gasförmigem Kraftstoff betriebene Fahrzeuge.

4. Verfahren zum Befüllen eines Druckbehälters (1) nach einem der Ansprüche 1, bis 3 mit einem Füllgas, bei dem das als Füllgas eingesetzte Gas oder Gasgemisch aus einem Tank (14), in dem das Füllgas in tiefkaltem verflüssigtem Zustand gelagert wird, entnommen und dem Druckbehälter (1) in kaltem gasförmigen oder flüssigen Zustand zugeführt wird, wobei danach der Druckbehälter verschlossen wird, bevor er sich auf Umgebungstemperatur aufwärmt.

5. Verfahren zum Befüllen eines Druckbehälters nach einem der Ansprüche 1 bis 3 mit einem Füllgas, bei dem das als Füllgas eingesetzte Gas oder Gasgemisch aus einem Tank (4), in dem das Füllgas unter Druck gelagert wird, entnommen, in einem Wärmetauscher (8) abgekühlt und dem Druckbehälter (1) in kaltem gasförmigen oder flüssigen Zustand zugeführt wird, wobei danach der Druckbehälter verschlossen wird, bevor er sich auf Umgebungstemperatur aufwärmt.

**Claims**

1. Pressure vessel (1) for pressures of above 300 bar, in particular for filling with low-boiling permanent gases or gas mixtures of low temperature, which is provided on the vessel inside with a surface (3) consisting of a material having a low heat penetration coefficient, to be precise of a plastic, the heat penetration coefficient of which amounts to only about 10 to 15% of the heat penetration coefficient of VA steel, in particular polyethylene or PTFE (polytetrafluoroethylene).

2. Pressure vessel according to Claim 1, **characterized in that** the material having a low heat penetration coefficient has a layer thickness of 2 to 5 mm.

3. Pressure vessel according to Claim 1 or 2, **characterized by** its design as an ultrahigh pressure vessel for pressures of above 700 bar, in particular as an energy store for fuel cells and/or for vehicles operated with gaseous fuel.

4. Method for filling a pressure vessel (1) according to one of Claims 1 to 3 with a filling gas, in which the gas or gas mixture used as filling gas is extracted from a tank (14), in which the filling gas is stored in a low-temperature liquefied state, and is supplied to the pressure vessel (1) in a cold gaseous or liquid state, the pressure vessel then being closed before it warms up to ambient temperature.

5. Method for filling a pressure vessel according to one of Claims 1 to 3 with a filling gas, in which the gas or gas mixture used as filling gas is extracted from a tank (4), in which the filling gas is stored under pressure, is cooled in a heat exchanger (8) and is supplied to the pressure vessel (1) in a cold gaseous or liquid state, the pressure vessel then being closed before it warms up to ambient temperature.

**Revendications**

1. Réservoir à pression (1) pour des pressions supérieures à 300 bar, en particulier pour le remplissage avec des gaz permanents à bas point d'ébullition ou des mélanges de gaz à basse température, le côté intérieur du réservoir étant pourvu d'une surface (3) constituée d'un matériau avec un coefficient d'effusivité thermique plus faible, notamment un plastique dont le coefficient de pénétration de chaleur équivaut seulement à 10 à 15% du coefficient d'effusivité thermique de l'acier inoxydable, en particulier le polyéthylène ou le PTFE (poly-tétra-fluor-éthylène).

2.  Réservoir à pression selon la revendication 1, **caractérisé en ce que** le matériau avec un faible coefficient d'effusivité thermique présente une épaisseur de couche de 2 à 5 mm.

3.  Réservoir à pression selon l'une des revendications 1 ou 2, **caractérisé en ce qu'**il est conçu comme un réservoir à haute pression pour des pressions supérieures à 700 bar, en particulier comme un réservoir énergétique pour des piles à combustible et/ou pour des véhicules fonctionnant avec un combustible gazeux.

4.  Procédé pour le remplissage d'un réservoir à pression (1) selon l'une des revendications 1 à 3, avec un gaz de remplissage, dans lequel le gaz ou le mélange gazeux utilisé en tant que gaz de remplissage est extrait d'une cuve (14), dans laquelle le gaz de remplissage est stocké à l'état de gaz cryogénique, et alimenté vers le réservoir à pression (1) à l'état froid gazeux ou liquide, le réservoir à pression étant ensuite fermé, avant d'atteindre la température ambiante.

5.  Procédé pour le remplissage d'un réservoir à pression selon l'une des revendications 1 à 3, avec un gaz de remplissage, dans lequel le gaz ou le mélange gazeux employé en tant que gaz de remplissage est extrait d'une cuve (4), dans laquelle le gaz de remplissage est stocké sous pression, puis refroidi dans un échangeur de chaleur (8) et alimenté vers le réservoir à pression (1) à l'état froid gazeux ou liquide, le réservoir à pression étant ensuite refermé, avant d'atteindre la température ambiante.

**_Fig. 1_**

**_Fig. 2_**

**IN DER BESCHREIBUNG AUFGEFÜHRTE DOKUMENTE**

**In der Beschreibung aufgeführte Patentdokumente**

- EP 0033386 A1
- DE 19817324 A1
- FR 2799526 A
- EP 0033386 A